# EUROPÄISCHE PATENTANMELDUNG

(11) **EP 0 979 718 A1**
(43) Veröffentlichungstag der Anmeldung: **16.02.2000**
(21) Anmeldenummer: 98890228.4
(22) Anmeldetag: 06.08.1998
(51) Int. Cl.: B29C 45/34

(54) **Verfahren zum Herstellen von Spritzgussteilen und Spritzgussform zur Durchführung des Verfahrens**

(71) Anmelder: Sterner, Franz, 4614 Marchtrenk (AT)
(72) Erfinder: Sterner, Franz, 4614 Marchtrenk (AT)
(74) Vertreter: Hübscher, Helmut, Dipl.-Ing.

(57) **Zusammenfassung**

Bei einem Verfahren zum Herstellen von Spritzgußteilen aus warm verfestigendem oder vulkanisierendem Material, insbesondere Elastomeren, in einer Spritzgußform (1 - 6), bei dem ein in einer zwei- oder mehrteiligen beheizten Spritzgußform (1 - 6) gebildetes Formnest (17) für den Spritzgußteil entlüftet, das Material eingespritzt und der Spritzgußteil nach der Verfestigung bzw. Vulkanisierung bei geöffneter Form ausgeworfen wird, wird nach dem Schließen der Form (1 - 6) und während des Einspritzvorganges ein im Formnest (17) verbleibender Luftrest durch einen oder mehrere, eine Mikroporosität aufweisende Wandungsteile (5, 6) des Formnestes ausgetrieben bzw. abgesaugt, so daß auch komplizierte und Hinterschneidungen aufweisende Formteile hergestellt werden können. Eine Spritzgußform zur Durchführung des Verfahrens ist angegeben.

## Beschreibung

Die Erfindung betrifft ein Verfahren zum Herstellen von Spritzgußteilen aus warm verfestigendem oder vulkanisierendem Material, insbesondere Elastomeren, in einer Spritzgußform, bei dem ein in einer zwei- oder mehrteiligen beheizten Spritzgußform gebildetes Formnest für den Spritzgußteil entlüftet, das Material eingespritzt und der Spritzgußteil nach der Verfestigung bzw. Vulkanisierung bei geöffneter Form ausgeworfen wird.

Die Erfindung betrifft auch eine Spritzgußform zur Durchführung dieses Verfahrens, die zwei- oder mehrteilig ausgebildet ist und zwischen ihren beheizten Formteilen wenigstens ein Formnest für einen Spritzgußteil umschließt, das über wenigstens eine Einspritzöffnung mit dem im flüssigen Zustand befindlichen Herstellungsmaterial für den bzw. die Spritzgußteile beschickbar ist, wobei Entlüftungseinrichtungen für den das bzw. die Formnester aufweisenden Bereich der Spritzgußform vorgesehen sind.

Verfahren und Vorrichtungen dieser Art sind aus der für die industrielle Fertigung modifizierten Ausgestaltung der Gegenstände des eigenen EP 0 162 037 B bekannt. Neben der dort beschriebenen, unmittelbaren Einspritzung des Herstellungsmaterials mit Hilfe von einer oder mehreren Einspritzdüsen, die an die Einspritzöffnung des Formnestes angesetzt oder in diese Einspritzöffnung eingeführt werden, sind auch Herstellungsverfahren bekannt, bei denen das Einspritzmaterial über sogenannte Verteilerspinnen zu den einzelnen Formnestern geführt wird, wobei die ersterwähnte Ausführung den Vorteil hat, daß keine Materialverluste auftreten, keine zusätzlichen Arbeitsgänge für das Abtrennen der Spritzgußteile von den die Verteilerspinne ausfüllenden Angußsträngen notwendig werden und bei richtiger Temperaturführung bzw. Kühlung in dem einen sehr kleinen Durchmesser aufweisenden Anspritzbereich aushärtende Pfropfen gebildet werden, so daß am Formling kaum sichtbare Abrißstellen entstehen und Nachbearbeitungen vermieden werden. Die Pfopfen können wegen ihrer kleinen Masse beim nächsten Spritzgußvorgang mit dem Einspritzmaterial in das Formnest ausgetrieben werden.

Die erwähnte Entlüftung des Formnestes ermöglicht bei relativ einfachen Formteilen eine wesentliche Erhöhung des Arbeitstaktes beim Einspritzvorgang, da die Luft zu einem großen Teil vor Beginn des Einspritzvorganges entfernt wird. Zu diesem Zweck ist es üblich, die meist als Formplatten ausgebildeten Formteile, die das Formnest in Einsätzen enthalten, zunächst nur bis zum Eingriff von das Formnest mit Abstand umschließenden Dichtungen zu schließen und aus dem innerhalb der Dichtungen zum Formnest führenden Spalten die Luft abzusaugen. Dann wird die Form vollständig geschlossen und der Einspritzvorgang durchgeführt. Wie erwähnt, ist das beschriebene Verfahren für die Verwendung relativ einfacher Formteile geeignet, wobei unter "einfach" Formteile verstanden werden, die keine zu starken Vertiefungen bzw. eng angeordnete Vertiefungen oder, bezogen auf die Einströmrichtung des Herstellungsmaterials, Hinterschneidungen aufweisen, dabei aber trotzdem ein kompliziertes Gesamtaussehen haben können. Als Beispiel für Formteile, aufdie der obige Begriff"einfach" nicht zutrifft, seien hier Spritzgußteile aus einem Elastomer genannt, die als elastischer Einsatz im Tastenfeld eines Handtelefones ("Handy") Verwendung finden, wobei hier die den einzelnen Tasten zugeordneten Hohlkörper sehr nahe aneinander liegen und, bezogen auf die Gesamtgröße, relativ tief sind. Solche Spritzgußteile lassen sich mit den bekannten Verfahren nicht einwandfrei herstellen. Der Grund dafür besteht darin, daß aus technischen Gründen kein vollständiges Vakuum bei der Luftabsaugung vor dem endgültigen Schließen der Form erzeugt werden kann und sich bei solchen komplizierten Formen daher Luftreste im Bereich starker Vertiefungen oder der erwähnten Hinterschneidungen ansammein können. Solche Luftreste verhindern in ihrem Bereich eine vollständige Füllung des Formnestes, so daß die Spritzgußteile nicht einwandfrei ausgebildet werden. Überdies kommt es durch die Isolierwirkung der Luftreste in ihrem Bereich bei raschem Arbeitstakt zu keiner ausreichenden Verfestigung bzw. Vulkanisation des Materials, so daß am ausgeworfenen Spritzgußteil klebrige Stellen vorhanden sein können, die eine ordnungsgemäße Weiterbearbeitung bzw. auch nur eine einwandfreie Verpackung der dann Halbfertigprodukte bildenden Teile beeinträchtigen bzw. unmöglich machen. Es ist daher bisher üblich, solche komplizierten Teile nach anderen Verfahren, z. B. nach dem sogenannten BATCH-Verfahren herzustellen, bei dem mit Materialüberschuß eine Formhälfte gefüllt und dann eine zweite Formhälfte langsam aufgedrückt wird. Hier ergibt sich keine einwandfreie Herstellungsqualität. Wegen des Materialüberschusses zwischen den Formhälften austretendes, vulkanisiertes Material muß entfernt werden, was bedeutet, daß ein nachträglicher Zuschnitt mit entsprechend sichtbaren Schnittstellen am Formteil erforderlich ist. Die Arbeitsbedingungen bei der Herstellung wechseln, so daß auch die Qualität der so hergestellten Produkte unterschiedlich wird. Auch bei im obigen Sinn "einfachen" Spritzgußteilen kann der verbleibende Luftrest zu Beeinträchtigungen der Qualität der Spritzgußteile führen. In jedem Fall wird aber eine Erhöhung der Taktzeiten wegen der dann durch den eingeschlossenen Luftrest auftretenden Schwierigkeiten unmöglich, so daß der Produktionsgeschwindigkeit Grenzen gesetzt sind.

Hauptaufgabe der Erfindung ist demnach die Schaffung eines Verfahrens, bei dem durch im Formnest eingeschlossene Luftreste bedingte Schwierigkeiten vermieden werden, also auch die Herstellung komplizierter, Hinterschneidungen aufweisender Formteile ermöglicht wird. Eine Teilaufgabe der Erfindung ist die Schaffung einer zur Durchführung des Verfahrens geeigneten Spritzgußform.

Die gestellte Hauptaufgabe wird dadurch gelöst, daß nach dem Schließen der Form und während des Einspritzvorganges ein im Formnest verbleibender Luftrest durch einen oder mehrere, eine Mikroporosität aufweisende Wandungsteile des Formnestes ausgetrieben bzw. abgesaugt wird.

Der Kunstgriff beim erfindungsgemäßen Verfahren besteht darin, wenigstens für Teile des Formnestes ein für die Luft durchlässiges, für das Einspritzmaterial aber undurchlässiges Material zu verwenden, wobei zu bedenken ist, beim Einspritzvorgang meist mit relativ hohen Drücken in Größenordnung von einigen 100 bar gearbeitet wird, so daß die Restluft auch durch die Einwirkung dieser hohen Drücke ausgetrieben wird. Vorzugsweisewird man auch beim erfindungsgemäßen Verfahren vor dem vollständigen Schließen der Form eine Teilevakuierung innerhalb des dann wie beschrieben abgedichteten Innenbereiches vornehmen, so daß nur die erwähnte Restluft zu entfernen ist. In Sonderfällen ist es aber auch denkbar, die Form gleich zu schließen und die gesamte Luft aus dem Formnest über die die Mikroporosität aufweisenden Wandungsteile abzuleiten.

Besonders bei "komplizierten" Spritzgußteilen ist das Entformen bisher häufig mit Schwierigkeiten verbunden und muß daher besonders vorisichtig vor sich gehen, um Beschädigungen zu vermeiden, wobei solche Beschädigungen nicht nur den Spritzgußteil unbrauchbar machen, sondern, falls Teilstücke abgerissen in der Form verbleiben, auch eine aufwendige Reinigung der Spritzgußform selbst bedingen, für die die Form wesentlich weiter als zum einfachen Ausstoß des Spritzgußteiles geöffnet werden muß. Diese Schwierigkeiten lassen sich beim erfindungsgemäßen Verfahren einfach dadurch beseitigen, daß der Entformungsvorgang durch Einblasen von unter Überdruck stehendem Gas durch den bzw. die die Mikroporosität aufweisenden Wandungsteile des Formnestes unterstützt bzw. bestimmt wird. Überdies ist es möglich, bei dem Öffnen der Form die Reihenfolge der Freigabe bzw. Abstoßung des Spritzgußteiles aus den Formteilen durch zeitlich versetzte Beaufschlagung von die Mikroporosität aufweisenden Wandungsteilen dieser Formteile mit dem unter Überdruck stehenden Gas zu bestimmen, was sowohl die Entformung als auch die weitere Handhabung des ausgeworfenen Spritzgußteiles erleichtert.

Nach einer bevorzugten Ausführung zeichnet sich die eingangs genannte Spritzgußform zur Durchführung des erfindungsgemäßen Verfahrens daduch aus, daß wenigstens ein Teil der Wandung des bzw. jedes Formnestes aus einem eine Mikroporosität aufweisenden Material besteht und dieser Wandungsteil mit einer vor dem Formnest endenden Entlüftungs- oder Saugleitung verbunden ist. Als besonders geeignet hat sich hier eine Ausführung gezeigt, bei der das die Mikroporosität aufweisende Material ein Sintermetall ist, dessen Mikroporen im Mikrometerbereich liegende Durchmesser aufweisen. Die Kapillarwirkung der Mikroporen verhindert trotz der Luftdurchlässigkeit ein Eindringen des Herstellungsmaterials für den Spritzgußteil, wobei etwas größere Poren zulässig werden, wenn ein vom Herstellungsmaterial für die Spritzgußteile nicht oder nur schwer benetzbares Sintermetall vorgesehen ist. In der Praxis wurden geeignete Materialien durch Reihenversuche an handelsüblichen Sintermetallproben gefunden.

Eine ausreichende Festigkeit der formgebenden, aus dem Sintermetall gefertigten Wandungsteile des Formnestes bleibt erhalten, wenn die Entlüftungs- oder Saugleitung bzw. -leitungen zu knapp unter der formgebenden Oberfläche des Sintermetalles im Formnest mündenden Sackbohrungen führen. Jede dieser Sackbohrungen hat dann an der formgebenden Oberfläche des Sintermetalls einen "Einzugsbereich" für die Restluft, der ein Vielfaches des eigenen Querschnittes beträgt.

Derzeit wird eine Ausführung bevorzugt, bei der die Wandungen des gesamten Formnestes aus dem Sintermetall bestehen, das seinerseits Einsätze für die gegeneinander verstellbaren Formteile bildet, wobei diese Einsätze durch die weiteren Formteile unterstützt werden und an der Rückseite der Einsätze Verteilerkanäle oder Spalte für die Luftableitung anbringbar sind. Es ist aber auch möglich, nur an für die Restluftansammlung kritischen Bereichen des Formnestes Sintermetalleinsätze und entsprechende Anschlüsse für die Luftabsaugung vorzusehen. In Sonderfällen kann man auch Sintermetalleinsätze mit etwas größeren Poren, z. B. in der Größenordnung von 0,01 mm Durchmesser verwenden, wenn im entsprechenden Bereich des Spritzgußteiles Oberflächenstrukturen, z. B. in Form einer Feinnoppung, zulässig bzw. erwünscht sind. Das Material wird hier trotzdem nur in geringem Ausmaß in die Poren eindringen, da diese bei der Herstellung des Sintermetalls aus entsprechenden Pulver- oder Mikrokugelmischungen keinen geradlinigen, sondern einen vielfach verzweigten, gekrümmten Verlauf zeigen.

Schließlich wird eine gezielte Entformung des Spritzgußteiles vorrichtungsmäßg dadurch ermöglicht, daß die Entlüftungs- bzw. Saugleitungen oder gesonderte in die die Mikroporosität aufweisenden Wandungen des Formnestes führende Leitungen zum Ausstoßen des Formteiles mit einer Druckgasquelle verbindbar sind.

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
Fig. 1schematisch in Ansicht einen als Formplatte mit Einsatzvertiefungen ausgebildeten Teil einer Spritzgußform,

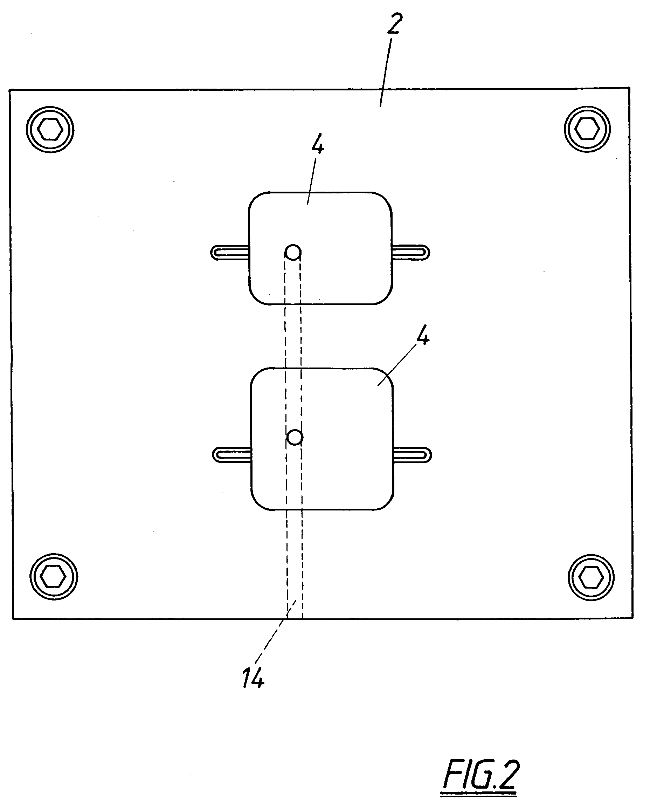

Fig. 2die zweite Formplatte dieser Spritzgußform ebenfalls in Ansicht,
Fig. 3eine Seitenansicht und Schnittdarstellung der geschlossenen Form im Bererich eines Formnestes, wobei der besseren Übersichtlichkeit halber auf Schraffen der im Schnitt dargestellten Formplatten verzichtet wurde,
Fig. 4 und 5 zwei einander zu einem Formnest ergänzende Einsatzteile für die Formplatten nach den Fig. 1 und 2,
Fig. 6in größeren Maßstab die geschlossene Form im Bereich eines Formnestes im Schnitt und
Fig. 7ebenfalls in Schnittdarstellung den Einmündungsbereich einer Einspritzdüse in das Formnest.

Die dargestellte Spritzgußform besitzt zwei mit einer nicht dargestellten Beheizungseinrichtung ausgestattete bzw. verbundene Formplatten 1, 2, die über Pressen aneinanderdrückbar und auf Spaltabstand einstellbar sind, wobei jede dieser Formplatten 1, 2 an einander gegenüberliegenden Stellen Einsatzvertiefungen 3, 4 für ein Formnest bildende Einsatzteile 5, 6 aufweist, die aus Sintermetall hergestellt sind und beim Ausführungsbeispiel der Fertigung eines Tastenfeldes für ein Handtelefon dienen. Die den einzelnen Tasten zugeordneten Vertiefungen im Einsatz 5 wurden beispielsweise mit 7 und die zugeordneten Erhöhungen am anderen Formeinsatz 6 mit 8 bezeichnet. Die Einsatzteile 5, 6 sind an ihrer Rückseite von Stützplatten 9, 10 unterstützt, die die Einsatzteile 5, 6 zu vollständigen Einsätzen für die Vertiefungen 3 bzw. 4 ergänzen. Zwischen der Rückseite dieser Stützplatten 9, 10 und dem Boden der Einsatzvertiefungen 3, 4 sind Verteilerspalte 11, 12 ausgespart, die mit Saugleitungen 13, 14 in Verbindung stehen, wobei beim Ausführungsbeispiel angenommen wird, daß die Saugleitungen 13, 14 auch wahlweise mit Druckluft beaufschlagt werden können.

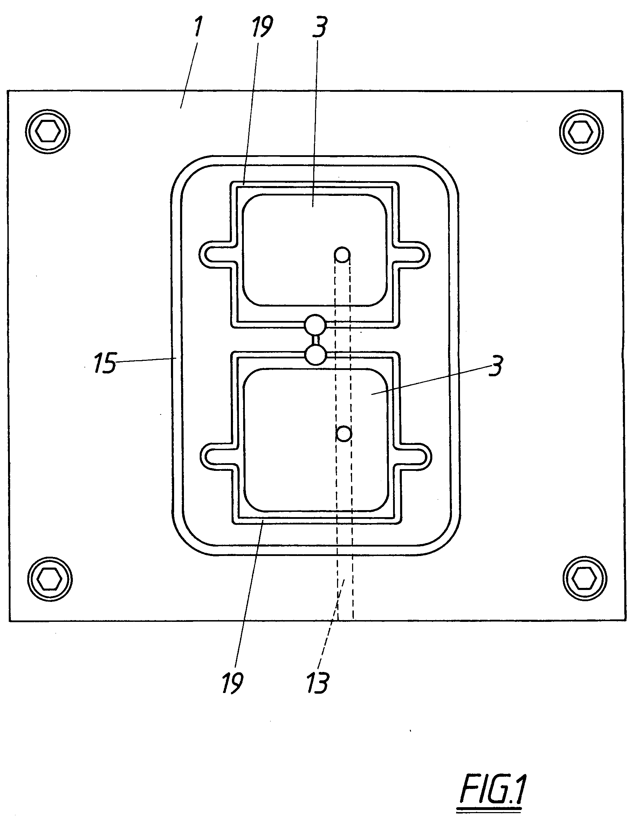

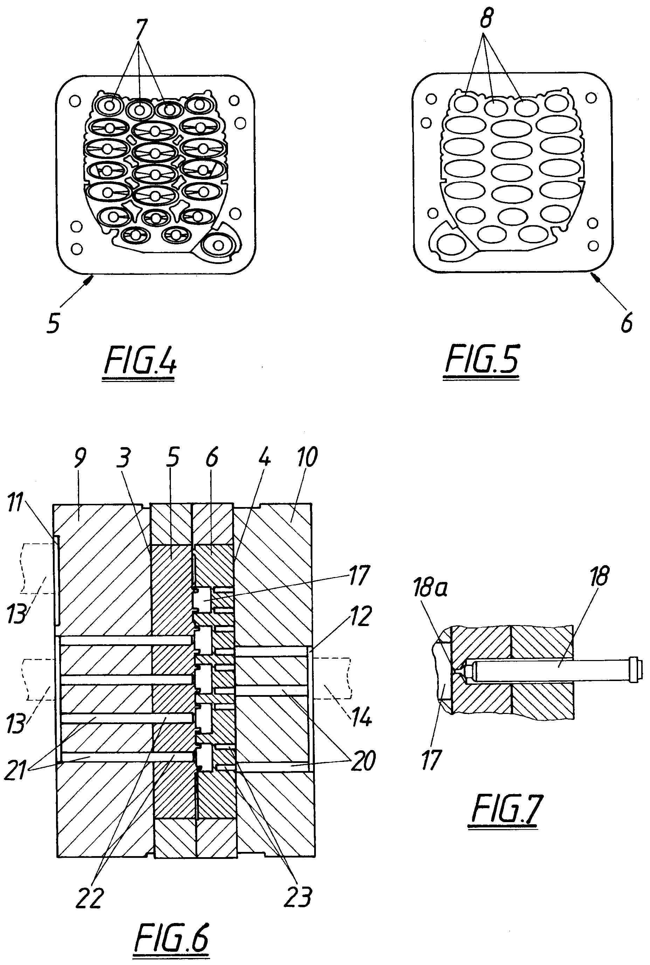

In der Formplatte 1 nach Fig. 1 ist um die beiden Einsatzvertiefungen 3 eine in sich geschlossene Nut 15 vorgesehen, die eine Anpreßdichtung 16 aufnimmt. Das von den Einsatzteilen 5, 6 umschlossene, von den Elementen 7, 8 mitbestimmte Formnest wurde in Fig. 6 und 7 allgemein mit 17 bezeichnet. Beim Ausführungsbeispiel wird angenommen, daß jedes der beiden Formnester 17 über eine Einspritzdüse 18 unmittelbar mit dem Herstellungsmaterial für den Spritzgußteil beschickt werden kann. Es wäre aber auch möglich, die Formnester in beiden Vertiefungen 3, 4 über einen Querkanal zu verbinden und nur an einer Stelle einzuspritzen. Rund um die Vertiefungen 3 verläuft je ein ebenfalls mit einer Saugleitung verbundener Ringkanal 19.

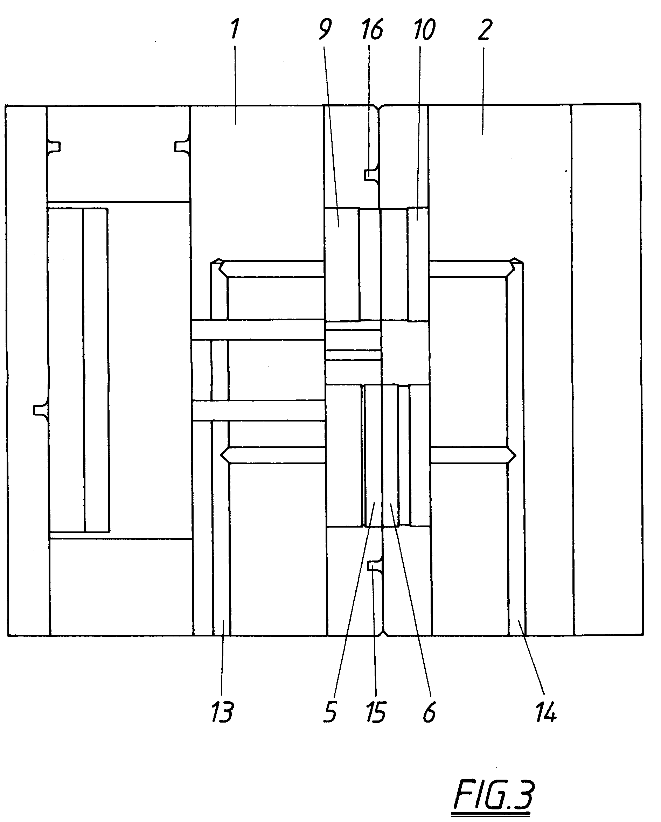

Beim Einspritzbetrieb werden zunächst die beiden Formplatten so weit zueinander verstellt, daß die Dichtung 16 den Formnestbereich abschließt. Dann wird über die Saugleitungen 13, 14, 19 der Großteil der Luft abgesaugt. Nun werden die beiden Formplatten vollständig in die Lage nach Fig. 3 und 6 zusammengefahren und es wird über die Düse bzw. Düsen 18 das Herstellungsmaterial in die Formnester 17 eingespritzt. Gleichzeitig wird weiter die nun vom Einspritzmaterial ausgetriebene Restluft abgesaugt, wobei, wie insbesondere Fig. 6 zeigt, von den Verteilern 11, 12 ausgehende Anschlußbohrungen 20, 21 eine Verbindung mit knapp unter der formgebenden Oberfläche der Einsätze 5, 6 mündenden Sackbohrungen 22, 23 hergestellt wird, so daß die Restluft aus dem Formnest 17 ausgetrieben und abgesaugt wird.

Nach der Verfestigung bzw. Vulkanisierung des das Formnest 17 vollständig ausfüllenden Materials (die zugeführte Materialmenge wird über eine Dosierpumpe exakt vorgegeben) werden die Formplatten 1, 2 so weit auseinandergefahren, daß ein Auswerfen des fertiggestellten Spritzgußteiles ermöglicht wird. Bei diesem Öffnen der Form wid zunächst jene Seite des Spritzgußteiles, die sich als erste von der zugeordneten formgebenden Oberfläche am Teil 5 bzw. 6 lösen soll, durch Druckgaszufuhr, z. B. über die Leitungen 13 oder 14, abgehoben. Sobald die volle Auswurfstellung erreicht ist, wird auch die zweite Seite des Spritzgußteiles durch Beaufschlagung mit Druckgas von der anderen Seite her vom zugehörigen Formteil gelöst und damit ausgeworfen.

## Patentansprüche

1. Verfahren zum Herstellen von Spritzgußteilen aus warm verfestigendem oder vulkanisierendem Material, insbesondere Elastomeren, in einer Spritzgußform (1 - 6), bei dem ein in einer zwei- oder mehrteiligen beheizten Spritzgußform (1 -6) gebildetes Formnest (17) für den Spritzgußteil entlüftet, das Material eingespritzt und der Spritzgußteil nach der Verfestigung bzw. Vulkanisierung bei geöffneter Form ausgeworfen wird, dadurch gekennzeichnet, daß nach dem Schließen der Form (1 - 6) und während des Einspritzvorganges ein im Formnest (17) verbleibender Luftrest durch einen oder mehrere, eine Mikroporosität aufweisende Wandungsteile (5, 6) des Formnestes ausgetrieben bzw. abgesaugt wird.

2. Verfahren nach Anspruch 1, dadurch gekennzeichnet, daß der Entformungsvorgang durch Einblasen von unter Überdruck stehendem Gas durch den bzw. die die Mikroporosität aufweisenden Wandungsteile (5, 6) des Formnestes (17) unterstützt bzw. bestimmt wird.

3. Verfahren nach Anspruch 2, dadurch gekennzeichnet, daß bei dem Öffnen der Form (1 - 6) die Reihenfolge der Freigabe bzw. Abstoßung des Spritzgußteiles aus den Formteilen (5, 6) durch zeitlich versetzte Beaufschlagung von die Mikroporosität aufweisenden Wandungsteilen dieser Formteile mit dem unter Überdruck stehenden Gas bestimmt wird.

4. Spritzgußform zur Durchführung des Verfahrens nach einem der Ansprüche 1 bis 3, die zwei- oder mehrteilig ausgebildet ist und zwischen ihren beheizten Formteilen (1, 2, 5, 6) wenigstens ein Formnest (17) für einen Spritzgußteil umschließt, das über wenigstens eine Einspritzöffnung (18a) mit dem im flüssigen Zustand befindlichen Herstellungsmaterial für den bzw. die Spritzgußteile beschickbar ist, wobei Entlüftungseinrichtungen (13, 14, 19) für den das bzw. die Formnester (17) aufweisenden Bereich der Spritzgußform vorgesehen sind, dadurch gekennzeichnet, daß wenigstens ein Teil der Wandung (5, 6) des bzw. jedes Formnestes (17) aus einem eine Mikroporosität aufweisenden Material besteht und dieser Wandungsteil mit einer vor dem Formnest endenden Entlüftungs- oder Saugleitung (13, 14, 19 - 23) verbunden ist.

5. Spritzgußform nach Anspruch 4, dadurch gekennzeichnet, daß das die Mikroporosität aufweisende Material ein Sintermetall ist, dessen Mikroporen im Mikrometerbereich liegende Durchmesser aufweisen.

6. Spritzgußform nach Anspruch 4 oder 5, dadurch gekennzeichnet, daß ein vom Herstellungsmaterial für die Spritzgußteile nicht oder nur schwer benetzbares Sintermetall vorgesehen ist.

7. Spritzgußform nach einem der Ansprüche 4 bis 6, dadurch gekennzeichnet, daß die Entlüftungs- oder Saugleitung bzw. -leitungen (13, 14, 19) zu knapp unter der formgebenden Oberfläche des Sintermetalles im Formnest (17) mündenden Sackbohrungen (22, 23) führen.

8. Spritzgußform nach einem der Ansprüche 4 bis 7, dadurch gekennzeichnet, daß die Wandungen (5, 6) des gesamten Formnestes (17) aus dem Sintermetall bestehen, das seinerseits Einsätze (5, 6, 9, 10) für die gegeneinander verstellbaren Formteile (1, 2) bildet.

9. Spritzgußform nach einem der Ansprüche 4 bis 8, dadurch gekennzeichnet, daß die Entlüftungs- bzw. Saugleitungen (13, 14, 19) oder gesonderte in die die Mikroporosität aufweisenden Wandungen (5, 6) des Formnestes (17) führende Leitungen zum Ausstoßen des Formteiles mit einer Druckgasquelle verbindbar sind.
